Europäisches Patentamt

European Patent Office

Office européen des brevets

(19)

(11) Numéro de publication: **0 166 668**
**A1**

# (12) DEMANDE DE BREVET EUROPEEN

(21) Numéro de dépôt: 85440044.7

(51) Int. Cl.⁴: **A 01 K 89/01**

(22) Date de dépôt: **19.06.85**

(30) Priorité: **20.06.84 FR 8409804**
**11.06.85 FR 8508994**

(71) Demandeur: **Monnin, Pierre, Près de l'Etang LA MALMAISON, F-25220 Roche Lez Beaupre (FR)**

(43) Date de publication de la demande: **02.01.86 Bulletin 86/1**

(72) Inventeur: **Monnin, Pierre, Près de l'Etang LA MALMAISON, F-25220 Roche Lez Beaupre (FR)**

(84) Etats contractants désignés: **DE GB IT SE**

(74) Mandataire: **Nuss, Pierre, 10, rue Jacques Kablé, F-67000 Strasbourg (FR)**

(54) **Moulinet de pêche muni d'un dispositif de débrayage de la bobine.**

(57) Moulinet caractérisé en ce qu'il est muni d'un dispositif (1) de débrayage de la bobine (2), qui est essentiellement constitué par un ensemble (3) de serrage taré de la bobine (2) sur un moyeu (4) solidaire de l'axe (5) du moulinet, et par un ensemble (6) d'actionnement de l'ensemble de serrage (3), qui est commandé par un levier (7) solidaire de l'anse du pick-up (8).

EP 0 166 668 A1

0166668

MONNIN Pierre, Près de l'Etang

LA MALMAISON 25220 ROCHE LEZ BEAUPRE (France)

Moulinet de pêche muni d'un dispositif
de débrayage de la bobine

La présente invention concerne le domaine des accessoires de loisir, en particulier des accessoires de pêche, et a pour objet un moulinet de pêche muni d'un dispositif de débrayage de la bobine.

Les moulinets de pêche existant actuellement sont généralement pourvus d'une bobine sur laquelle agit un frein réglable au moyen d'un bouton moleté, d'une vis papillon, ou analogue.

La bobine et le frein sont montés ensemble, de manière fixe, sur un axe de support effectuant une translation alternative au cours du mouvement d'enroulement du fil sur la bobine au moyen d'un pick-up monté sur un tambour entourant partiellement la bobine et entraîné par l'intermédiaire d'un renvoi d'angle au moyen d'un levier de manoeuvre, la roue solidaire de ce levier agissant par l'intermédiaire d'un excentrique et d'une pièce de liaison sur l'axe à mouvement de translation alternative.

Le réglage du frein permet d'autoriser une rotation de la bobine relativement à son axe à partir d'un couple prédéterminé, c'est-à-dire lorsqu'une certaine force s'exerce sur le fil. Ce couple est généralement préréglé à une valeur correspondant à une force de traction légèrement inférieure à la tension de rupture du fil.

Ces freins de moulinet connus ne permettent cependant pas un réglage suffisamment précis du couple de freinage en toutes configurations d'enroulement du fil, à savoir lorsque la bobine porte encore une grande longueur de fil, ou lorsque la longueur d'enroulement est plus réduite. En outre, du fait du préréglage du frein, un accrochage du bas de ligne à une brindille, ou à un autre élément du fond, nécessite soit d'essayer de ramener la ligne, soit de libérer celle-ci par action sur le pick-up.

La présente invention a pour but de pallier ces inconvénients.

Elle a, en effet, pour objet un moulinet de pêche caractérisé en ce qu'il est muni d'un dispositif de débrayage de la bobine, qui est essentiellement constitué par un ensemble de serrage taré de la bobine sur un moyeu solidaire de l'axe du moulinet, et par un ensemble d'actionnement de l'ensemble de serrage, qui est commandé par un levier solidaire de l'anse du pick-up.

Conformément à une variante de réalisation de l'invention, le dispositif de débrayage est un dispositif manuel à débrayage progressif, essentiellement constitué par un levier de manoeuvre monté à articulation au moyen d'un axe sur la partie arrière du carter du moulinet et comportant un secteur denté, par une roue dentée engrenant avec le secteur denté du levier et montée solidaire en rotation libre en translation, sur un axe de transmission qui traverse l'axe de support du moyeu du moulinet, cet axe de transmission étant monté libre en rotation sur l'axe et solidarisé en translation avec ce dernier et coopérant par son extrémité libre filetée avec un taraudage d'un axe guidé dans le moyeu et solidaire d'un flasque d'actionnement de l'ensemble de serrage taré de la bobine au moyen de poussoirs, l'axe de support du moyeu étant solidarisé avec ce dernier par l'intermédiaire d'un flasque.

L'invention sera mieux comprise grâce à la des-

3     0166668

cription ci-après, qui se rapporte à des modes de réalisation préférés, donnés à titre d'exemples non limitatifs, et expliqués avec référence aux dessins schématiques annexés, dans lesquels :

la figure 1 est une vue partielle en coupe d'un moulinet muni d'un dispositif conforme à l'invention ;

la figure 2 est une vue en plan de l'ensemble d'actionnement ;

la figure 3 est une vue en élévation latérale du levier solidaire de l'anse du pick-up ;

la figure 4 est une vue partielle en coupe d'une variante de réalisation de l'invention, et

la figure 5 est une vue en élévation au niveau du levier de manoeuvre et de la roue dentée.

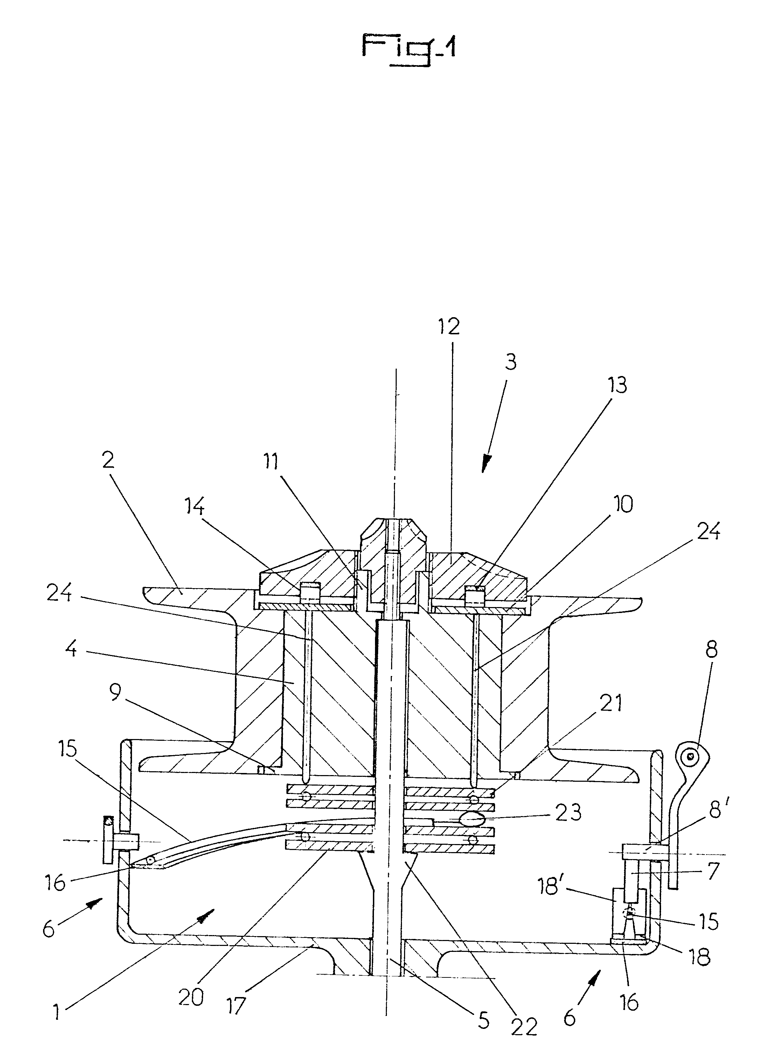

Conformément à l'invention, et comme le montre plus particulièrement, à titre d'exemple, la figure 1 des dessins annexés, le moulinet de pêche est muni d'un dispositif de débrayage 1 de la bobine 2, qui est constitué par un ensemble 3 de serrage taré de ladite bobine 2 sur un moyeu 4, qui est solidaire de l'axe 5 du moulinet. L'ensemble de serrage 3 est commandé par un ensemble d'actionnement 6, sur lequel agit un levier 7 solidaire de l'anse du pick-up 8.

L'ensemble 3 de serrage taré de la bobine 2 est constitué par un épaulement 9 prévu à la partie inférieure du moyeu 4 solidaire de l'axe 5, par une rondelle de serrage 10 centrée sur un moignon fileté 11 de l'extrémité libre du moyeu 4 et appuyant sur la bobine 2, et par un bouton 12 de tarage du serrage de la bobine 2, coopérant avec le moignon fileté 11, et muni d'un ressort à lamelle 13 s'appuyant sur la rondelle 10 et logé dans une gorge circulaire 14 du bouton 12.

L'actionnement de ce bouton 12 permet ainsi de serrer plus ou moins fort la bobine 2 entre l'épaulement 9 et la rondelle 10, et donc d'établir un couple de friction déterminé en fonction du fil enroulé sur la bobine 2.

L'ensemble 6 d'actionnement de l'ensemble de serrage 3 est constitué par un câble de commande gainé 15

fixé par sa gaine sur une lamelle métallique 16 solidaire à une extrémité du fond du tambour 17 de support du pick-up 8, au niveau du levier 7, et dont l'autre extrémité est libre et légèrement enroulée en spirale en direction de l'axe 5 du moulinet, par un coulisseau 18 monté à glissement guidé sur l'extrémité fixe de la lamelle métallique 16, maintenant une extrémité du câble de commande 15, et actionné sur une partie de butée 18', d'un côté par le levier 7, et du côté opposé par un ressort 19 à tension réglable, par deux butées à billes 20 et 21 montées sur l'axe 5, dont la butée inférieure 20 s'appuie sur un épaulement 22 dudit axe 5, et dont la butée supérieure 21 est montée sur ledit axe 5 avec possibilité de déplacement vertical, par une came 23 montée entre les butées 20 et 21 et actionnée par l'autre extrémité du câble de commande 15, et par des poussoirs 24 traversant le moyeu 4 de la bobine 2 et s'appuyant, d'une part, sur la butée supérieure 21, et, d'autre part, sur la face inférieure de la rondelle 10.

L'extrémité libre de la lamelle métallique 16 est avantageusement reliée au flasque supérieur de la butée à billes inférieure, et la came 23 est montée à pivotement sur ce flasque et est reliée par l'intermédiaire d'un levier d'actionnement solidaire de son axe à l'extrémité correspondante du câble 15.

Le levier 7 est disposé à l'intérieur du tambour 17 de support du pick-up 8 et est solidaire de ce dernier par fixation sur son axe 8'. Ainsi, lorsque le pick-up est en position de dévidage du fil de ligne, le levier 7 est basculé vers le haut et est sans effet sur l'ensemble d'actionnement 6, tandis qu'en position d'embobinage du fil, il est en butée contre la face correspondante de la partie de butée 18' du coulisseau 18.

En position d'utilisation du moulinet, le fil de ligne s'appuie sur le galet 8" de l'anse du pick-up 8, et le levier 7 est appliqué contre la butée 18' du coulisseau 18, qui est soumis, sur la face opposée de la butée, à l'action du ressort 19, dont la tension est préréglée à une valeur minimale permettant d'éviter un débrayage intempestif dû, par exemple, à une légère résistance suite à un accrochage de l'hameçon à une brindille, ou analogue. La pression de serrage de la bobine 2 est réglée au moyen du bouton de tarage 12 qui serre le ressort à lamelle 13 sur la rondelle 10, de manière à obtenir un couple de friction correspondant sensiblement à une force de traction légèrement inférieure à la tension de rupture du fil, et la pression de la rondelle 10 sur les poussoirs 24 transmet intégralement la force de serrage sur le flasque supérieur de la butée à billes supérieure 21.

Si, après le ferrage, la tension sur le fil augmente fortement, l'anse de pick-up tend à basculer autour de son axe et appuie par l'intermédiaire du levier 7 sur la butée 18' du coulisseau 18 contre l'action du ressort 19. Dans le cas où la traction sur le fil est inférieure à la limite de rupture du fil, le serrage de la came 23 entre les flasques des butées 20 et 21, correspondant au couple de friction maximal agissant sur le tambour 2, est maintenu et la traction exercée par le coulisseau 18 sur le câble de commande 15 est inopérante. Dès atteinte de la force de traction limite sur le fil de ligne, le coulisseau 18 entraîne le câble 15 et la traction de ce dernier sur le levier de la came 23 provoque un couple de pivotement de ladite came 23 qui est supérieur à la force appliquée par les poussoirs 24 sur le flasque supérieur de la butée 21, de sorte que cette dernière est déplacée vers le haut entraînant lesdits poussoirs 24, qui repoussent la rondelle, débrayant ainsi la bobine 2. Un tel débrayage peut également se produire dans le cas d'accrochage à un obstacle important, de sorte qu'une rupture de la ligne avec perte d'accessoires peut être évitée.

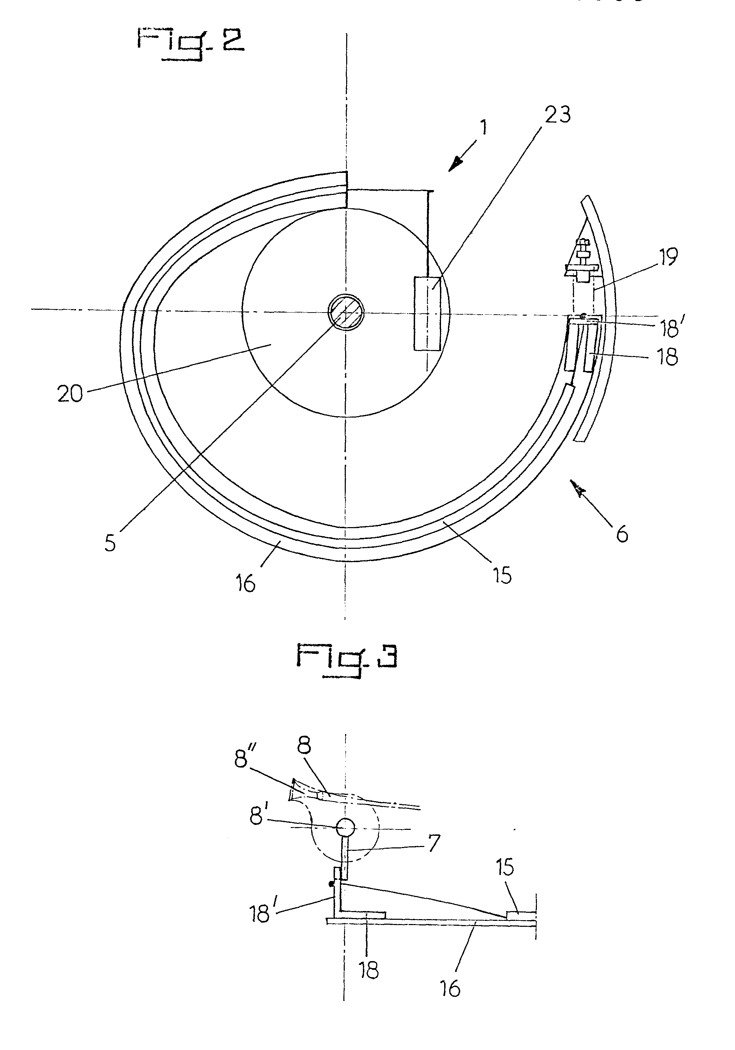

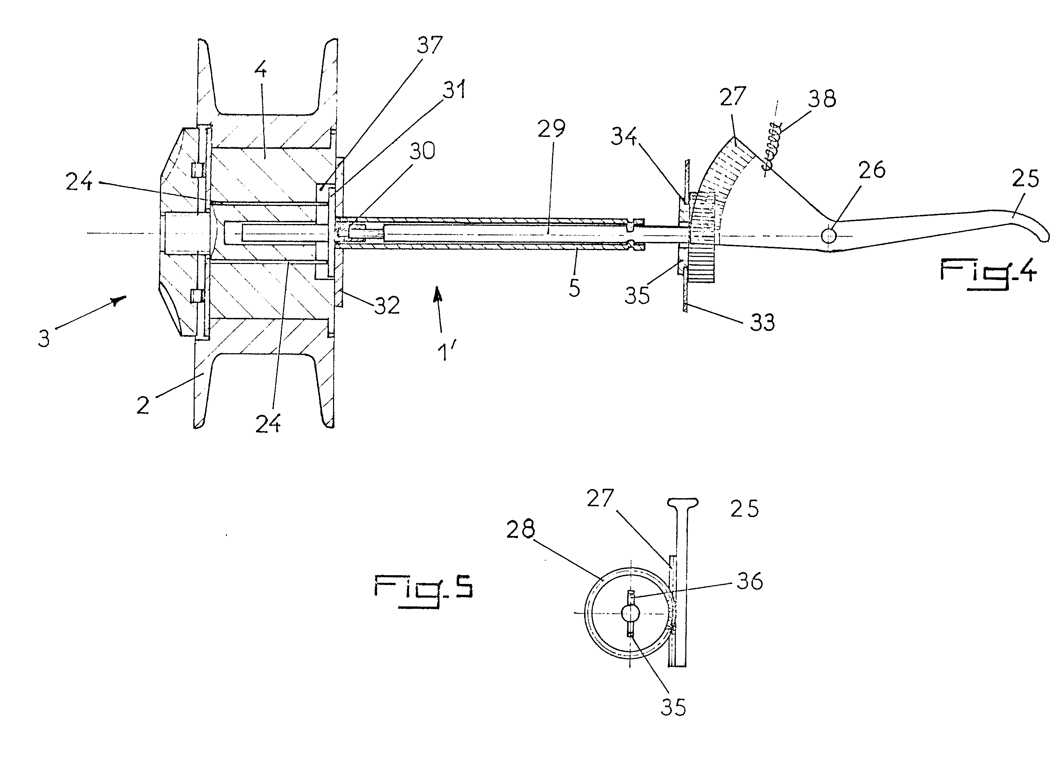

Conformément à une variante de réalisation de l'invention, et comme le montrent les figures 4 et 5 des dessins annexés, le dispositif de débrayage 1' est un dispositif manuel à débrayage progressif, qui est essentiellement constitué par un levier de manoeuvre 25 monté à articulation au moyen d'un axe 26 sur la partie arrière du carter 33 du moulinet, et qui comporte un secteur denté 27 engrenant avec une roue dentée 28, qui est montée, solidaire en rotation et libre en translation sur un axe de transmission 29 qui traverse l'axe 5 de support du moyeu 4 du moulinet.

L'axe de transmission 29 est monté libre en rotation et solidaire en translation sur l'axe 5 et coopère par son extrémité libre filetée avec un taraudage d'un axe 30 qui est guidé dans le moyeu 4 et est solidaire d'un flasque 31 d'actionnement de l'ensemble 3 de serrage taré de la bobine 2 au moyen des poussoirs 24. L'axe 5 est solidarisé avec le moyeu 4, à la partie inférieure de ce dernier, par l'intermédiaire d'un flasque 32.

La roue dentée 28 est solidaire en translation du carter 33 du moulinet grâce à une gorge de guidage 34 et est munie de rainures 35 diamétralement opposées destinées à coopérer avec des clavettes 36 solidaires de l'extrémité de l'axe de transmission 29. Ainsi, le va-et-vient de l'axe 5, en cours d'enroulement du fil sur la bobine 2, ne gêne en aucun cas la liaison en rotation entre l'axe 29 et la roue dentée 28.

A sa partie inférieure tournée vers le flasque 32, le moyeu 4 est pourvu d'un chambrage 37 de logement du flasque 31 actionnant les poussoirs 24.

Le levier 25 est chargé par un ressort de rappel 38, près de son secteur denté 27, ce ressort 38 étant relié à son autre extrémité au carter 33 du moulinet. Ainsi, en position de repos du levier 25, ce dernier est basculé dans une position dans laquelle son extrémité de préhension est éloignée de la poignée de la canne à pêche. L'extrémité filetée de l'axe 29 est alors vissée à fond dans le taraudage de l'axe 30 de sorte que le flasque 31 solidaire de ce dernier repose sur le flasque 32 solidaire de l'axe 5. En action de pêche, pour réaliser un débrayage progressif de la bobine 2, il suffit à l'utilisateur de tirer l'extrémité libre du levier 25 en direction de la poignée de la canne à pêche, contre l'action du ressort 38, de sorte que le secteur denté 27 entraîne la roue dentée 28 en rotation, dévissant l'extrémité filetée de l'axe 29 du taraudage de l'axe 30. Cette action de dévissage a pour effet de pousser l'axe 30 et le flasque 31, qui en est solidaire, vers le haut entraînant ainsi les poussoirs 24 qui déplacent la rondelle de serrage 10 contre l'action du ressort 13, de sorte que la bobine 2 est progressivement débrayée par suppression de son serrage. Un relâchement de l'extrémité libre de la poignée 25 a pour effet immédiat, sous l'action du ressort 38, de réaliser à nouveau l'embrayage de la bobine 2 par une suite de mouvements inverse de celle décrite ci-dessus.

Selon une autre variante de réalisation de l'invention, non représentée aux dessins annexés, le dispositif de débrayage 1' est combiné avec le dispositif de débrayage automatique 1, l'axe 30 étant alors guidé dans la partie supérieure de l'axe 5 et le flasque 31 étant remplacé par une goupille traversant des rainures longitudinales dudit axe 5 et s'appuyant sous les butées de l'ensemble d'actionnement de l'ensemble de serrage 3. Par un tel mode de réalisation, le débrayage progressif manuel peut être effectué sans risque de déréglage du dispositif de débrayage.

Conformément à une autre caractéristique de l'invention, non représentée aux dessins annexés, le levier 25 coopère avec des dispositifs d'arrêt en position escamotables du type chargé par ressort ou à commande mécanique. Ainsi, il est possible de maintenir, par exemple, la bobine 2 en position débrayée, notamment pour la pêche au posé.

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention.

0165668

- R E V E N D I C A T I O N S -

1. Moulinet de pêche caractérisé en ce qu'il est muni d'un dispositif (1) de débrayage de la bobine (2), qui est essentiellement constitué par un ensemble (3) de serrage taré de la bobine (2) sur un moyeu (4) solidaire de l'axe (5) du moulinet, et par un ensemble (6) d'actionnement de l'ensemble de serrage (3), qui est commandé par un levier (7) solidaire de l'anse du pick-up (8).

2. Moulinet, suivant la revendication 1, caractérisé en ce que l'ensemble (3) de serrage taré de la bobine (2) est constitué par un épaulement (9) prévu à la partie inférieure du moyeu (4) solidaire de l'axe (5), par une rondelle de serrage (10) centrée sur un moignon fileté (11) de l'extrémité libre du moyeu (4) et appuyant sur la bobine (2) et par un bouton (12) de tarage du serrage de la bobine (2), coopérant avec le moignon fileté (11), et muni d'un ressort à lamelle (13) s'appuyant sur la rondelle (10) et logé dans une gorge circulaire (14) du bouton (12).

3. Moulinet, suivant l'une quelconque des revendications 1 et 2, caractérisé en ce que l'ensemble (6) d'actionnement de l'ensemble de serrage (3) est constitué par un câble de commande gainé (15) fixé par sa gaine sur une lamelle métallique (16) solidaire à une extrémité du fond du tambour (17) de support du pick-up (8), au niveau du levier (7) et dont l'autre extrémité est libre et légèrement enroulée en spirale en direction de l'axe (5) du moulinet, par un coulisseau (18) monté à glissement guidé sur l'extrémité fixe de la lamelle métallique (16), maintenant une extrémité du câble de commande (15), et actionné sur une partie de butée

(18'), d'un côté par le levier (7), et du côté opposé par un ressort (19) à tension réglable, par deux butées à billes (20 et 21) montées sur l'axe (5), dont la butée inférieure (20) s'appuie sur un épaulement (22) dudit axe (5), et dont la butée supérieure (21) est montée sur ledit axe (5) avec possibilité de déplacement vertical, par une came (23) montée entre les butées (20 et 21) et actionnée par l'autre extrémité du câble de commande (15), et par des poussoirs (24) traversant le moyeu (4) de la bobine (2) et s'appuyant, d'une part, sur la butée supérieure (21), et, d'autre part, sur la face inférieure de la rondelle (10).

4. Moulinet, suivant la revendication 3, caractérisé en ce que l'extrémité libre de la lamelle métallique (16) est avantageusement reliée au flasque supérieur de la butée à billes inférieure, et la came (23) est montée à pivotement sur ce flasque et est reliée par l'intermédiaire d'un levier d'actionnement solidaire de son axe à l'extrémité correspondante du câble (15).

5. Moulinet, suivant l'une quelconque des revendications 1 et 3, caractérisé en ce que le levier (7) est disposé à l'intérieur du tambour (17) de support du pick-up (8) et est solidaire de ce dernier par fixation sur son axe (8').

6. Moulinet, suivant l'une quelconque des revendications 1 et 2, caractérisé en ce que le dispositif de débrayage (1') est un dispositif manuel à débrayage progressif, essentiellement constitué par un levier de manoeuvre (25) monté à articulation au moyen d'un axe (26) sur la partie arrière du carter (33) du moulinet et comportant un secteur denté (27), par une roue dentée (28) engrenant avec le secteur denté (27) du levier (25) et montée, solidaire en rotation libre en translation, sur un axe de transmission (29) qui traverse l'axe (5) de support du moyeu (4) du moulinet, cet axe de transmission (29) étant monté libre en rotation sur l'axe (5) et solidarisé en translation avec ce dernier et coopérant par son extrémité libre filetée avec un taraudage d'un axe (30) guidé dans le moyeu (4) et solidaire d'un flasque (31) d'actionnement de l'ensemble (3) de serrage taré de la bobine (2) au moyen de poussoirs (24), l'axe (5) de support du moyeu (4) étant solidarisé avec ce dernier par l'intermédiaire d'un flasque (32).

7. Moulinet, suivant la revendication 6, caractérisé en ce que la roue dentée (28) est solidaire en translation du carter (33) du moulinet grâce à une gorge de guidage (34) et est munie de rainures (35) diamétralement opposées destinées à coopérer avec des clavettes (36) solidaires de l'extrémité de l'axe de transmission (29).

8. Moulinet, suivant la revendication 6, caractérisé en ce qu'à sa partie inférieure tournée vers le flasque (32), le moyeu (4) est pourvu d'un chambrage (37) de logement du flasque (31) actionnant les poussoirs (24).

9. Moulinet, suivant la revendication 6, caractérisé en ce que le levier (25) est chargé par un ressort de rappel (38), près de son secteur denté (27), ce ressort (38) étant relié à son autre extrémité au carter (33) du moulinet.

10. Moulinet, suivant l'une quelconque des revendications 1, 6 à 9, caractérisé en ce que le dispositif de débrayage (1') est combiné avec le dispositif de débrayage automatique (1), l'axe (30) étant alors guidé dans la partie supérieure de l'axe (5) et le flasque (31) étant remplacé par une goupille traversant des rainures longitudinales dudit axe (5) et s'appuyant sous les butées de l'ensemble d'actionnement de l'ensemble de serrage (3).

11. Moulinet, suivant l'une quelconque des revendications 6 à 10, caractérisé en ce que le levier (25) coopère avec des dispositifs d'arrêt en position escamotables du type chargé par ressort ou à commande mécanique.

0166668

# Fig.1

0166668

Fig.2

Fig.3

Fig.4

37
31
30
4
29
34
27
38
24
26
25
3
2
24
32
1'
5
35
33

Fig.5

28
27
25
36
35

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | US-A-2 896 874 (NURMSE) | | A 01 K 89/01 |
| A | US-A-2 932 464 (MAUBORGNE) | | |
| A | US-A-3 025 020 (SARAH) | | |
| A | US-A-3 139 241 (JOHNSON) | | |
| A | US-A-3 143 315 (HARRINGTON) | | |
| A | US-A-3 232 554 (JOHNSON) | | DOMAINES TECHNIQUES RECHERCHES (Int. Cl.4) |
| A | US-A-3 297 275 (SARAH) | | A 01 K |
| A | US-A-3 487 658 (JOHNSON) | | |
| A | US-A-3 814 349 (MENNE) | | |

Le présent rapport de recherche a été établi pour toutes les revendications

| Lieu de la recherche | Date d'achèvement de la recherche | Examinateur |
|---|---|---|
| LA HAYE | 27-08-1985 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82